(19) Europäisches Patentamt
European Patent Office
Office européen des brevets

(11) Veröffentlichungsnummer : **0 027 588**
**B1**

# (12) EUROPÄISCHE PATENTSCHRIFT

(45) Veröffentlichungstag der Patentschrift : **15.03.89**

(51) Int. Cl.[4] : **C 08 L 27/06**

(21) Anmeldenummer : **80106035.1**

(22) Anmeldetag : **06.10.80**

## (54) Verfahren zur Stabilisierung von Polyvinylchloridformmassen und Mittel zur Durchführung des Verfahrens und damit hergestellte Artikel.

(30) Priorität : **13.10.79 DE 2941596**
**16.06.80 AT 3168/80**

(43) Veröffentlichungstag der Anmeldung : **29.04.81 Patentblatt 81/17**

(45) Bekanntmachung des Hinweises auf die Patenterteilung : **15.03.89 Patentblatt 89/11**

(84) Benannte Vertragsstaaten :
**AT BE CH DE FR GB IT LI NL**

(56) Entgegenhaltungen :

**Keine**

**Die Akte enthält technische Angaben, die nach dem Eingang der Anmeldung eingereicht wurden und die nicht in dieser Patentschrift enthalten sind.**

(73) Patentinhaber : **NEYNABER CHEMIE GmbH**
**Am Wedenberg Postfach 11 20**
**D-2854 Loxstedt (DE)**

(72) Erfinder : **Worschech, Kurt, Dr.**
**Alte Strasse 4**
**D-2854 Loxstedt (DE)**
Erfinder : **Wedl, Peter**
**Brookstrasse 10**
**D-2854 Loxstedt-Bexhövede (DE)**
Erfinder : **Löffelholz, Frido**
**Vieländer Weg 226 F**
**D-2854 Bremerhaven (DE)**

**EP 0 027 588 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Stabilisierung von Formmassen auf Basis von Polyvinylchlorid oder im wesentlichen Vinylchlorid enthaltenden Mischpolymerisaten.

Bei der Herstellung von Artikeln aus Polyvinylchlorid werden in der Praxis überwiegend Blei-, Zinn- oder Barium-/Cadmiumverbindungen als Stabilisatoren eingesetzt. Diese Schwermetallstabilisatoren zeigen in der Praxis eine durchaus befriedigende Wirkung ; gegen ihren Einsatz bestehen jedoch gewisse Bedenken, insbesondere solche arbeitsphysiologischer Art. Aus diesem Grund versucht man schon seit langem, die überlicherweise verwendeten Schwermetallstabilisatoren durch weniger bedenkliche Substanzen zu ersetzen. In diesem Zusammenhang ist bereits vorgeschlagen worden, anstelle der Schwermetallstabilisatoren Seifen der leichten Erdalkalimetalle zu verwenden. Dabei werden vorzugsweise Calciumseifen eingesetzt, die gegebenenfalls durch Co-Stabilisatoren wie Zinkstearat, Iminoverbindungen und Epoxyverbindungen ergänzt werden.

Der stabilisierende Effekt des Calciumseifensystems ist gegenüber dem der Schwermetallverbindungen vergleichsweise gering. Formgegenstände, die unter Verwendung eines Stabilisatorsystems auf Basis von Calciumseifen hergestellt wurden, zeigen häufig dunkle Verfärbungen und besitzen eine geringe Reststabilität. Infolgedessen ist die Anwendungsbreite solcher Stabilisatorsysteme erheblich beschränkt.

In der DE-OS 26 42 509 wird eine Stabilisatorkombination beschrieben, die neben Calciumstearat und/oder Zinkstearat einen Partialester des Pentaerythrits mit einer $C_{12}$-$C_{22}$-Fettsäure, einen wachsartigen Kohlenwasserstoff und/oder eine freie $C_{12}$-$C_{22}$-Fettsäure sowie ein Antioxidationsmittel enthält. Die erwünschte Gleichwirkung mit Stabilisatorsystemen auf Basis von Schwermetallverbindungen wird hiermit jedoch nicht erreicht.

Die US-PS-4 000 100 beschreibt die Verwendung von sogenanntem nichtaktiviertem Zeolith A in Stabilisatorsystemen für Harzmassen auf PVC-Basis. Der Lehre dieser Druckschrift liegt die Erkenntnis zugrunde, daß durch die Einarbeitung bestimmter wasserhaltiger Zeolith-Typen in Stabilisatorsysteme synergistische Wirkungssteigerungen bezüglich Wärme- und Lichtschutz erzielt werden können. Die hierfür vorgeschlagenen Zeolithe umfassen die Typen 3A, 4A und 5A. Sie sollen in Verbindung mit beliebigen anorganischen, organometallischen oder organischen Stabilisatoren bzw. Stabilisatorkomponenten zum Einsatz kommen.

In Römpps Chemielexikon, 7. Auflage, Stuttgart 1977, Seite 3574 findet sich unter dem Stichwort « Thioglykolsäure » isoliert die Anmerkung, daß Ester der Thioglykolsäure wie z. B. Decylthioglykolat oder Isooctylthioglykolat als Weichmacher und Stabilisatoren für halogenierte Polyolefine verwendet werden.

Der vorliegenden Erfindung liegt die Aufgabe zugrunde, die Stabilisierung von Polyvinylchlorid mit Hilfe von Kombinationen auf Basis von Calcium- und gegebenenfalls zinkseifen so zu verbessern, daß ohne die Mitverwendung von Blei-, Zinn-, Barium- oder Cadmiumverbindungen die Herstellung von hellpigmentierten oder weißen Polyvinylchloridartikeln mit befriedigender Reservestabilität ermöglicht wird. Der erfindungsgemäß vorgeschlagenen Lösung dieser Aufgabe liegt die überraschende Erkenntnis zugrunde, daß durch Auswahl und Kombination einer Mehrzahl bestimmter Komponenten einschließlich der Auswahl eines bestimmten Natriumalumosilikats vom Zeolith-Typ das angestrebte Ziel erreicht werden kann.

Gegenstand der Erfindung ist dementsprechend in einer ersten Ausführungsform ein Verfahren zur Stabilisierung von Polyvinylchloridformmassen, das dadurch gekennzeichnet ist, daß man in die Formmassen auf 100 Teile Polyvinylchlorid

a) 0,2-5 Gewichtsteile eines synthetischen, kristallinen, 13 bis 25 Gew.-% gebundenes Wasser enthaltenden, feinteiligen Natriumalumosilikats, das — bezogen auf die wasserfreie Form — die Zusammensetzung 0,7-1,1 $Na_2O \cdot Al_2O_3 \cdot 1{,}3\text{-}2{,}4\ SiO_2$ hat (Zeolith 4 A),

b) 0,05-1,5 Gewichtsteile Calciumsalz von Fettsäuren mit 8 bis 22 Kohlenstoffatomen,

c) 0,05-0,5 Gewichtsteile Zinksalz von Fettsäuren mit 8 bis 22 Kohlenstoffatomen,

d) 0,2-2,0 Gewichtsteile Partialester aus Fettsäuren mit 8 bis 22 Kohlenstoffatomen und Polyolen mit 2 bis 6 Kohlenstoffatomen und 2 bis 6 Hydroxylgruppen, die pro Molekül im Durchschnitt mindestens eine freie Polyol-Hydroxylgruppe enthalten und OH-Zahlen zwischen 140 und 580 aufweisen,

e) 0,1-1,0 Gewichtsteile Thioglykolsäureester von Polyolen mit 2 bis 6 Hydroxylgruppen und/oder Thioglykolsäureester monofunktioneller Alkohole mit 8 bis 22 Kohlenstoffatomen

einarbeitet.

Gegenstand der Erfindung ist ferner eine Stabilisatorkombination für Polyvinylchloridformmassen, die aus einer Mischung der oben genannten Komponenten a) bis e) in den oben genannten Mengenverhältnissen besteht.

Gegenstand der Erfindung sind schließlich die im Sinne der erfindungsgemäßen Lehre stabilisierten Artikel aus Harzmassen auf PVC-Basis. Dabei sind sowohl die entsprechend stabilisierten Formmassen als solche sowie die daraus durch beliebige Verformung gewonnenen Formkörper umfaßt.

Bei den oben definierten synthetischen kristallinen Natriumalumosilikaten handelt es sich um an sich bekannte Zeolithe vom Typ NaA, die einen durchschnittlich wirksamen Porendurchmesser von 4 Å besitzen, weshalb sie auch als Zeolithe 4 A bezeichnet werden. Derartige Natriumalumosilikate können nach bekannten Methoden hergestellt werden. Geeignete Syntheseverfahren sind u. a. in der DE-OS-24 12 837 beschrieben. Weitere Einzelheiten zur Beschaffenheit und Herstellung dieser Natrium-Alumosilikate sind beispielsweise den folgenden Literaturstellen zu entnehmen : DE-OS 26 51 485, DE-OS 26 51 445, DE-OS 26 51 436, DE-OS 26 51 419, DE-OS 26 51 420, DE-OS 26 51 437, US-PS 3 112 176.

Bei der Herstellung können durch Ausfällung entstandene amorphe, feinverteilte Natriumalumosilikate durch Erhitzen auf 50 bis 200 °C in den kristallinen Zustand überführt werden. Danach wird das kristalline Natriumalumosilikat durch Filtration von der verbleibenden wäßrigen Lösung abgetrennt und in der Regel bei 50 bis 200 °C getrocknet, bis es einen Wassergehalt von 13 bis 25 Gewichtsprozent aufweist. Die zum Beispiel in der DE-OS 24 12 837 beschriebenen und erfindungsgemäß eingesetzten kristallinen Produkte weisen insbesondere eine Teilchengröße im Bereich von 0,1 bis 50 µm auf. Für die Durchführung des erfindungsgemäßen Verfahrens werden bevorzugt Natriumalumosilikate mit einer Teilchengröße von 0,1 bis 20 µm eingesetzt. Das bei 22 °C bestimmte Calciumbindevermögen der Natriumalumonisilikate beträgt wenigstens 50 mg CaO/g wasserfreier Aktivsubstanz und kann Werte von etwa 200 mg CaO/g Aktivsubstanz erreichen. Bevorzugt liegt dieses Calciumbindevermögen im Bereich von 100-200 mg CaO/g Aktivsubstanz und dabei üblicherweise im Bereich oberhalb 150 mg CaO/g. Einzelheiten zur Bestimmung des Calciumbindevermögens sind der zitierten DE-OS 24 12 837 sowie den nachfolgenden Angaben zur Herstellung geeigneter Natriumalumosilikate zu entnehmen.

In einer bevorzugten Ausführung des erfindungsgemäßen Verfahrens können auch Natriumalumosilikate mit abgerundeten Ecken und Kanten verwendet werden. Zur Herstellung solcher Zeolithe geht man mit Vorteil von einem Ansatz aus, dessen molare Zusammensetzung im Bereich

$$2{,}5\text{-}6{,}0\ Na_2O \cdot Al_2O_3 \cdot 0{,}5\text{-}5{,}0\ SiO_2 \cdot 60\text{-}200\ H_2O$$

liegt. Dieser Ansatz wird in üblicher Weise zur Kristallisation gebracht. Dies geschieht vorteilhafterweise dadurch, daß man den Ansatz wenigstens 1/2 Stunde lang auf 70-120 °C, vorzugsweise auf 80-95 °C unter Rühren erwärmt. Das kristalline Produkt wird auf einfache Weise durch Abtrennen der flüssigen Phase isoliert, gegebenenfalls mit Wasser nachgewaschen und dann getrocknet.

Bei der Durchführung des erfindungsgemäßen Verfahrens lassen sich auch solche feinteiligen wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden ; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1-5 Gewichtsprozent, bezogen auf den gesamten Fällungsansatz, betragen. Zum Kristallisieren wird das Fällungsprodukt 1/2 bis 24 Stunden auf 50 bis 200 °C erhitzt. Aus der Vielzahl brauchbarer Dispergiermittel sind als Beispiele Natriumalaurylethersulfat, Natriumpolyacrylat und die Natriumsalze der 1-Hydroxyethan-1,1-diphosphonsäure zu nennen.

Die erfindungsgemäß geeigneten Natriumalumosilikate des Typs NaA enthalten 13 bis 25 Gewichtsprozent gebundenes Wasser ; bevorzugt werden solche Produkte eingesetzt, deren Wassergehalt im Bereich von 18 bis 25 Gewichtsprozent liegt.

Die erfindungsgemäß verwendeten fettsauren Calcium- und Zinksalze leiten sich vorzugsweise von Fettsäuren wie Capryl-, Caprin-, Laurin-, Myristin-, Palmitin- und Stearinsäure ab. Zum Einsatz kommen sowohl Salze einzelner Fettsäuren als auch Salze von Fettsäuregemischen, wie sie besonders aus natürlichen Fetten und Ölen gewonnen werden können. Bevorzugt eingesetzt werden die Calcium- und Zinksalze der Palmitin- und der Stearinsäure.

Die Polyolpartialester der Komponente d) werden in an sich bekannter Weise durch Veresterung von Polyolen mit 2 bis 6 Kohlenstoffatomen und 2 bis 6 Hydroxylgruppen mit Fettsäuren einer Kettenlänge von 8 bis 22 Kohlenstoffatomen hergestellt, wobei übliche Veresterungskatalysatoren mitverwendet werden können. Polyol und Fettsäure werden dabei im Molverhältnis 1 : 1 bis 1 : (n — 1) miteinander umgesetzt, wobei n die Anzahl der Hydroxylgruppen des Polyols bedeutet. Vorzugsweise setzt man die Reaktionsteilnehmer in solchen Mengen ein, daß sich Partialester mit einer OH-Zahl zwischen 170 und 540 bilden. Das Reaktionsprodukt, das jeweils ein Gemisch verschiedener Ester darstellt, soll eine Säurezahl haben, die unter 15, insbesondere unter 8 liegt. Geeignete Polyolkomponenten sind Ethylenglykol, Propylenglykol-1,2, Propylenglykol-1,3, Butylenglykol-1,2, Butylenglykol-1,4, Hexandiol-1,6, Neopentylglykol, Glycerin, Trimethylolethan, Trimethylolpropan, Pentaerythrit, Erythrit, Mannit und Sorbit. Besonders wichtige Polyolkomponenten besitzen 3-6 Hydroxylgruppen und vorzugsweise 3 oder 4 Hydroxylgruppen. Glycerin und Pentaerythrit können im hier erörterten Zusammenhang im Rahmen der Erfindung mit besonderem Vorteil Verwendung finden. Als geeignete Fettsäurekomponenten seien beispielsweise Capryl-, Caprin-, Laurin-, Myristin-, Palmitin-, Stearin- und Behensäure genannt. Es können auch synthetische Fettsäuren der erwähnten Kettenlänge, wie Montansäuren, oder ungesättigte

Säuren, wie Ölsäure und Linolensäure, oder auch substituierte Fettsäuren, insbesonderehydroxylierte Säuren wie 12-Hydroxystearinsäure eingesetzt werden. Aus praktischen Gründen werden zumeist Gemische von Fettsäuren verwendet, wie sie aus natürlichen Fetten und Ölen gewonnen werden. Selbstverständlich kann die Komponente d) auch aus einem Gemisch der vorgenannten Partialester bestehen. Partialester aus Polyolen mit 3-6 Hydroxylgruppen, vorzugsweise 3 oder 4 Hydroxylgruppen und den genannten Fettsäuren, die im Schnitt 2 bis 3 freie Hydroxylgruppen enthalten, können besonders bevorzugte Verbindungen im Sinne der Komponente d) sein.

Als Komponente e) kommen in einer Ausführungsform der Erfindung Thioglykolsäureester von aliphatischen Polyolen mit 2 bis 6 Hydroxylgruppen in Betracht. Vorzugsweise enthalten diese Polyole 2 bis 36 Kohlenstoffatome, insbesondere 2 bis 18 Kohlenstoffatome. Beispiele für Polyole mit 2 bis 6 Kohlenstoffatomen sind Ethylenglykol, Propylenglykol-1,2, Propylenglykol-1,3, Butylenglykol-1,2, Butylenglykol-1,4, Hexandiol-1,6, Neopentylglykol, Glycerin, Trimethylolethan, Trimethylolpropan, Pentaerythrit, Mannit und Sorbit. Geeignet sind aber insbesondere auch Polyole höherer Kohlenstoffzahl des genannten Bereichs, zum Beispiel solche mit 8 bis 18 Kohlenstoffatomen. Bevorzugte Polyole sind in einer Ausführungsform solche mit 2 bis 4 Hydroxylgruppen und hier insbesondere Ethylenglykol, Glycerin und/oder Pentaerythrit. Besonders geeignet sind weiterhin $\alpha,\omega$-Alkandiole mit 8 bis 18 Kohlenstoffatomen wie 1,10-Decandiol, 1,12-Decandiol und 1,18-Octadecandiol. Geeignet sind weiterhin Diole beziehungsweise Polyole, die unter anderem durch Hydrolyse von längerkettigen Epoxyalkanen erhalten werden können. Hierbei handelt es sich um Polyole mit vicinalen OH-Gruppen, die end- und nichtendständig angeordnet sein können, beispielsweise Octandiol-1,2, Decandiol-1,2, Tetradecandiol-1,2, Octadecandiol-1,2, Gemische aus vicinalen Alkandiolen mit nichtendständigen OH-Gruppen der Kettenlängen $C_{12}$ oder $C_{14}$ sowie der Kettenlängenbereiche $C_{11}$ bis $C_{14}$, $C_{14}$ bis $C_{16}$ und $C_{15}$ bis $C_{18}$. Bei den in Frage kommenden Thioglykolsäureestern handelt es sich um Produkte, die beispielsweise dadurch erhalten werden, daß man ein Polyol der oben definierten Art in üblicher Weise mit Thioglykolsäure im Molverhältnis 1 : 1 bis 1 : n umsetzt, wobei n die Anzahl der Hydroxylgruppen des Polyols bedeutet. Dabei können alle Hydroxylgruppen des Polyols mit Thioglykolsäure verestert sein. Bevorzugt kommen erfindungsgemäß allerdings solche Thioglykolsäureester zum Einsatz, die im Schnitt pro Polyolmolekül höchstens 3 Thioglykolsäurereste und vorzugsweise einen oder maximal zwei Thioglykolsäurereste aufweisen. Werden in der Komponente e) Thioglykolsäureester monofunktioneller Alkohole eingesetzt, so besteht die Alkoholkomponente dieser Ester aus einem aliphatischen, geradkettigen oder verzweigten, primären, sekundären oder tertiären Alkohol mit 8 bis 22 Kohlenstoffatomen. Als Beispiele für mögliche Alkoholkomponenten seien n-Octanol, n-Dodecanol, n-Hexandecanol, n-Octadecanol und insbesondere 2-Ethylhexanol genannt.

Die Komponente e) besteht im einfachsten Fall aus einem bestimmten Polyolthioglykolsäureester oder einem Thioglykolsäureester eines monofunktionellen Alkohols. Es können aber auch beliebige Kombinationen dieser Substanzgruppen eingesetzt werden, wobei die Bestandteile wiederum Stoffgemische darstellen können.

In einer bevorzugten Ausführungsform des erfindungsgemäßen Verfahrens arbeitet man in die Formmassen auf Basis von Polyvinylchlorid als Komponente d) einen Pentaerythritpartialester von Fettsäuren mit 8 bis 22 Kohlenstoffatomen mit einem Molverhältnis von Pentaerythrit : Fettsäure im Bereich von 1 : 1 bis 1 : 2 und als Komponente e) einen Thioglykolsäureester eines monofunktionellen Alkohols mit 8 bis 18 Kohlenstoffatomen, einen Monothioglykolsäureester von aliphatischen Diolen mit 2 bis 6 Kohlenstoffatomen oder ein Glycerinmonothioglykolat ein.

Die in dem erfindungsgemäßen Verfahren verwendete Stabilisatorkombination kann durch weitere bekannte Co-Stabilisatoren und Hilfsstoffe, je nach dem Verwendungszweck der stabilisierten Polyvinylchloridformmassen, modifiziert werden. Solche an sich bekannten Zusatzstoffe können in üblichen Mengen zum Beispiel in Mengen von 0,1 bis 20 Gewichtsteilen/100 Gewichtsteile PVC-Harzmasse zum Einsatz kommen.

Bei der Stabilisierung von Formmassen, die für die Herstellung von Rohren und Profilen im Extrusionsverfahren bestimmt sind, können zum Beispiel mit der Stabilisatormischung pro 100 Gewichtsteile PVC, 0,5-1 Gewichtsteile Paraffin vom Schmelzpunkt 50-100 °C und/oder freie Fettsäure mit 8 bis 22 Kohlenstoffatomen eingearbeitet werden, wobei als Fettsäuren wieder die weiter oben genannten Substanzen in Betracht kommen.

In Polyvinylchloridformmassen, die für die Herstellung von Hohlkörpern im Extrusionsblasverfahren bestimmt sind, können auf 100 Gewichtsteile PVC zusätzlich beispielsweise 0,5-5 Gewichtsteile epoxidiertes Sojaöl und 0,1-8 Gewichtsteile hochmolekulares Esterwachs eingearbeitet werden. Als hochmolekulares Esterwachs kommen Montanwachse und Paraffinoxidate in Betracht, vor allem aber Komplexester aus

a) aliphatischen, cycloaliphatischen und/oder aromatischen Dicarbonsäuren mit 2 bis 22 Kohlenstoffatomen im Molekül,

b) aliphatischen Polyolen mit 2 bis 6 Hydroxylgruppen im Molekül und

c) aliphatischen Monocarbonsäuren mit 12 bis 30 Kohlenstoffatomen im Molekül,

in denen das Molverhältnis der unter a), b) und c) genannten Stoffe etwa

$$n-1 : n : nm-2(n-1)$$

beträgt, wobei n eine ganze Zahl von 2 bis 11 und m die Funktionalität des Polyols darstellt. Diese Mischester weisen Hydroxyl- und Säurezahlen im Bereich von 0 bis circa 15 auf. Sie können nach bekannten, beispielsweise in der DE-PS 19 07 768 beschriebenen Verfahren hergestellt werden. Vorzugsweise werden Komplexester aus Adipinsäure, Pentaerythrit und Stearinsäure im oben angegebenen Molverhältnis eingesetzt, wobei n eine ganze Zahl von 2 bis 8 darstellt.

In Polyvinylchloridformmassen für die Herstellung von Folien im Kalanderwalzverfahren werden beispielsweise auf 100 Gewichtsteile PVC zusätzlich 0,5 bis 5 Gewichtsteile epoxidiertes Sojaöl, 0,1 bis 1 Gewichtsteile des oben definierten hochmolekularen Esterwachses und 0,2 bis 0,5 Gewichtsteile α-Phenylindol oder Benzoylstearoylmethan als Co-Stabilisatoren eingearbeitet. Im übrigen bewirken hier 0,05 bis 0,2 Gewichtsteile Calciumseifen und 0,1 bis 0,2 Gewichtsteile Zinkseifen pro 100 Gewichtsteile PVC eine vollkommen ausreichende Stabilisierung.

In einer bevorzugten Ausführungsform des erfindungsgemäßen Verfahrens werden in Formmassen, die zur Herstellung von Rohren und Profilen im Extrusionsverfahren bestimmt sind, auf 100 Gewichtsteile Polyvinylchlorid

a) 1 bis 2 Gewichtsteile Natriumalumosilikat,
b) 0,8 bis 1,2 Gewichtsteile Calciumsalze von Fettsäuren,
c) 0,1 bis 0,4 Gewichtsteile Zinksalze von Fettsäuren,
d) 0,3 bis 0,5 Gewichtsteile eines Pentaerythritpartialesters von Fettsäuren,
e) 0,2 bis 0,5 Gewichtsteile Thioglykolsäureester,
f) 0,5 bis 1 Gewichtsteile Paraffin und/oder Fettsäure

eingearbeitet.

Die erfindungsgemäßen Stabilisatormischungen können durch einfaches, mechanisches Vermischen der Bestandteile in konventionellen Mischern erhalten werden. Bei der Herstellung fallen sie als rieselfähige, nichtstaubende Produkte an.

Das erfindungsgemäße Verfahren wird zur Stabilisierung von Polyvinylchlorid oder Mischpolymerisaten des Vinylchlorids mit einem überwiegenden Gehalt an Vinylchlorid eingesetzt. Diese Polymerisate können durch Suspensions- oder Blockpolymerisation hergestellt sein ; ihr K-Wert kann zwischen etwa 35 und 80 liegen. In den Rahmen der Erfindung fällt die Stabilisierung von Harzgemischen, die überwiegend solche Polymerisate auf Vinylchloridbasis enthalten.

Die erfindungsgemäßen, stabilisierten Polyvinylchloridformmassen werden vor allem zur Herstellung von Rohren und Profilen im Extrusionsverfahren, zur Herstellung von Verpackungshohlkörpern und zur Herstellung von gewalzten Folien verwendet. Beliebig geformte Artikel fallen in den Rahmen der Erfindung.

Die Verarbeitungseigenschaften der PVC-Formmassen, die mit Hilfe des erfindungsgemäßen Verfahrens stabilisiert wurden, sind mit den Eigenschaften der schwermetallstabilisierten PVC-Formmassen durchaus vergleichbar. Dies gilt insbesondere für die Anfangsfarbe, die Anfangsstabilität und die Reststabilität der Formmassen. Demzufolge stellt die im erfindungsgemäßen Verfahren verwendete Stabilisatorkombination einen vollwertigen Ersatz für die bisher verwendeten Schwermetallstabilisatorkombinationen dar. Das erfindungsgemäße Verfahren bringt somit einen erheblichen Fortschritt zum Beispiel auf dem Gebiet der Arbeitsphysiologie mit sich.

Im folgenden wird zunächst beispielhaft die Herstellung geeigneter Natriumalumosilikate geschildert.

Herstellung geeigneter Natriumalumosilikate

In einem Gefäß von 15 l Inhalt wurde die Aluminatlösung unter starkem Rühren mit der Silikatlösung versetzt. Gerührt wurde mit einem Rührer mit Dispergierscheibe bei 3 000 Umdrehungen/min. Beide Lösungen hatten Raumtemperatur. Es bildete sich unter exothermer Reaktion als Primärfällungsprodukt ein röntgenamorphes Natriumalumosilikat. Nach 10 Minuten langem Rühren wurde die Suspension des Fällungsproduktes in einen Kristallisationsbehälter überführt, wo sie 6 Stunden bei 90 °C unter Rühren (250 Umdrehungen/min.) zum Zwecke der Kristallisation verblieb. Nach Absaugen der Lauge vom Kristallbrei und Nachwaschen mit entionisiertem Wasser, bis das ablaufende Waschwasser einen pH-Wert von circa 10 aufwies, wurde der Filterrückstand getrocknet. Die Wassergehalte wurden durch einstündiges Erhitzen der vorgetrockneten Produkte auf 800 °C bestimmt. Die bis zum pH-Wert von circa 10 gewaschenen beziehungsweise neutralisierten und dann getrockneten Natriumalumosilikate wurden anschließend in einer Kugelmühle gemahlen. Die Korngrößenverteilung wurde mit Hilfe einer Sedimentationswaage bestimmt.

Das Ca-Bindevermögen der Al-Silikate wurde in der folgenden Weise bestimmt :

1 l einer wäßrigen, 0,594 g $CaCl_2$ (= 300 mg CaO/l = 30° dH) enthaltenden und mit verdünnter NaOH auf einen pH-Wert von 10 eingestellten Lösung wird mit 1 g Alumosilikat versetzt (auf AS bezogen). Dann wird die Suspension 15 Minuten lang bei einer Temperatur von 22 °C (± 2 °C) kräftig gerührt. Nach

Abfiltrieren des Alumosilikates bestimmt man die Resthärte x des Filtrates. Daraus errechnet sich das Calciumbindevermögen in mg CaO/g AS nach der Formel : (30 — x) · 10.

Bestimmt man das Calciumbindevermögen bei höheren Temperaturen, zum Beispiel bei 60 °C, so findet man durchweg bessere Werte als bei 22 °C.

Herstellungsbedingungen für das Natriumalumosilikat A

Alle Prozentangaben beziehen sich auf Gewichtsprozent. Fallung :

2,985 kg Aluminatlösung der Zusammensetzung : 17,7 % $Na_2O$, 15,8 % $Al_2O_3$, 66,6 % $H_2O$
0,15 kg Ätznatron
9,420 kg Wasser
2,445 kg einer aus handelsüblichem Wasserglas und leicht alkalilöslicher Kieselsäure frisch hergestellten, 25,8 %igen Natriumsilikatlösung der Zusammensetzung 1 $Na_2O \cdot 6{,}0\ SiO_2$

Kristallisation : 6 Stunden bei 90 °C
Trocknung : 24 Stunden bei 100 °C
Zusammensetzung : 0,9 $Na_2O \cdot 1\ Al_2O_3 \cdot 2{,}04\ SiO_2 \cdot 4{,}3\ H_2O$ (= 21,6 % $H_2O$)
Kristallisationsgrad : voll kristallin
Calciumbindevermögen : 170 mg CaO/g Aktivsubstanz.

Bei der durch Sedimentationsanalyse bestimmten Teilchengrößenverteilung ergab sich das Teilchengrößenmaximum bei 3-6 μ.

Das Natriumalumosilikat A zeigt im Röntgenbeugungsdiagramm folgende Interferenzlinien :
d-Werte, aufgenommen mit Cu-$K_\alpha$-Strahlung in Å

12,4
8,6
7,0
4,1
3,68 (+)
3,38 (+)
3,26 (+)
2,96 (+)
2,73 (+)
2,60 (+)

Es ist durchaus möglich, daß im Röntgenbeugungsdiagramm nicht alle diese Interferenzlinien auftreten, insbesondere, wenn die Alumosilikate nicht voll durchkristallisiert sind. Daher wurden die für die Charakterisierung dieser Typen wichtigsten d-Werte mit einem « (+) » gekennzeichnet.

Herstellungsbedingungen für das Natriumalumosilikat B

Alle Prozentangaben beziehen sich auf Gewichtsprozent. Fällung :

7,63 kg einer Aluminatlösung der Zusammensetzung 13,2 % $Na_2O$ ; 8,0 % $Al_2O_3$ ; 78,8 % $H_2O$ ;
2,37 kg einer Natriumsilikatlösung der Zusammensetzung 8,0 % $Na_2O$ ; 26,9 % $SiO_2$ ; 65,1 % $H_2O$ ;
Ansatzverhältnis in Mol : 3,24 $Na_2O$ ; 1,0 $Al_2O_3$ ; 1,78 $SiO_2$ ; 70,3 $H_2O$ ;
Kristallisation : 6 Stunden bei 90 °C ;
Trocknung : 24 Stunden bei 100 °C
Zusammensetzung des getrockneten Produktes : 0,99 $Na_2O \cdot 1{,}00\ Al_2O_3 \cdot 1{,}83\ SiO_2 \cdot 4{,}0\ H_2O$ ; (= 20,9 % $H_2O$) ;
Kristallform : kubisch mit stark abgerundeten Ecken und Kanten ;
mittlerer Parikeldurchmesser : 5,4 μ ;
Calciumbindevermögen : 172 mg CaO/g Aktivsubstanz.

Herstellungsbedingungen für das Natriumalumosilikat C

Alle Prozentangaben beziehen sich auf Gewichtsprozent. Fällung :

12,15 kg einer Aluminatlösung der Zusammensetzung 14,5 % $Na_2O$ ; 5,4 % $Al_2O_3$ ; 80,1 % $H_2O$ ;
2,37 kg einer Natriumsilikatlösung der Zusammensetzung 8,0 % $Na_2O$ ; 26,9 % $SiO_2$ ; 65,1 % $H_2O$ ;
Ansatzverhältnis in Mol : 5,0 $Na_2O$ ; 1,0 $Al_2O_3$ ; 2,0 $SiO_2$ ; 100 $H_2O$ ;
Kristallisation : 1 Stunde bei 90 °C ;
Trocknung : Heißzerstäubung einer Suspension des gewaschenen Produktes (pH 10) bei 295 °C ; Feststoffgehalt der Suspension 46 % ;

Zusammensetzung des getrockneten Produktes : 0,96 $Na_2O \cdot 1\ Al_2O_3 \cdot 1{,}96\ SiO_2 \cdot 4\ H_2O$ ;
Kristallform : kubisch mit stark abgerundeten Ecken und Kanten ; Wassergehalt 20,5 % ;
mittlerer Partikeldurchmesser : 5,4 μ ;
Calciumbindevermögen : 172 mg CaO/g Aktivsubstanz.

## Beispiele

In den Beispielen 1 bis 3 wurde die Wirkung der Stabilisatorkombinationen anhand der « statischen Thermostabilität » von Walzfellen geprüft. Zu diesem Zweck wurden Stabilisatorgemische enthaltende Polyvinylchloridformmassen auf einem Laborwalzwerk der Abmessung 450 × 220 mm (Fa. Berstorff) bei einer Walzentemperatur von 170 °C und einer Walzendrehzahl von 12,5 Upm im Gleichlauf im Verlauf von 5 Minuten zu Prüffellen verarbeitet. Die circa 0,5 mm dicken Felle wurden zu quadratischen Probestücken mit 10 mm Kantenlänge zerschnitten, die anschließend in einem Trockenschrank mit 6 rotierenden Horden (Heraeus FT 420 R) einer Temperatur von 180 °C ausgesetzt wurden. Im Abstand von 15 Minuten wurden Proben entnommen und deren Farbveränderung begutachtet.

In den nachfolgenden Tabellen 2, 4 und 5 ist in Abhängigkeit von der eingesetzten Stabilisatormischung zunächst die Anfangsfarbe angegeben und dann die Zeit, nach der der Test wegen zu starker Verfärbung (Stabilitätsabbruch) beendet wurde.

## Beispiel 1

Die Polyvinylchloridformmassen A bis F, deren Zusammensetzungen der Tabelle 1 zu entnehmen sind, wurden nach der oben angegebenen Methode untersucht.

(Siehe Tabelle 1 Seite 8 f.)

Tabelle 1

| Bestandteil | PVC-Formmasse | | | | | |
|---|---|---|---|---|---|---|
| | A | B | C | D | E | F |
| Suspensions-PVC (K-Wert 65) | 100 | 100 | 100 | 100 | 100 | 100 |
| Natriumalumosilikat[1] | 2,0 | 2,0 | 2,0 | - | - | - |
| Calciumstearat | 1,0 | 1,0 | 1,0 | 1,0 | 1,0 | 1,0 |
| Zinkstearat | 0,3 | 0,3 | 0,3 | 0,3 | 0,3 | 0,3 |
| Pentaerythritstearinsäureester[2] | 0,3 | - | 0,3 | 0,3 | 0,3 | - |
| Wachsester (Typ Cetylpalmitat) | - | 0,3 | - | - | - | - |
| 2-Ethylhexylthioglykolat | 0,3 | 0,3 | - | 0,3 | - | - |
| Paraffin, Smp. 71 °C | 0,75 | 0,75 | 0,75 | 0,75 | 0,75 | 0,75 |

[1]) Synthetischer Zeolith NaA ; $Na_2O$ : $Al_2O_3$ ; $SiO_2$ = 0,9 : 1 : 2,04 ;
Wassergehalt : 21,6 Gewichtsprozent ;
Teilchengrößenmaximum : 3-6 µ.
[2]) Molverhältnis Pentaerythrit : Stearinsäure = 1 : 1,5, OH-Zahl 212.

Bei der Zusammensetzung A handelt es sich um eine nach dem erfindungsgemäßen Verfahren stabilisierte PVC-Formmasse, die sich insbesondere für die Herstellung von Rohren und Profilen im Extrusionsverfahren eignet. Die Zusammensetzungen B bis F stellen Vergleichsformmassen dar, die aus der Rezeptur A durch Weglassen oder Austausch einzelner Komponenten erhalten wurden.

Die gefundenen Werte für die « statische Thermostabilität » sind in der Tabelle 2 wiedergegeben.

Tabelle 2

| Formmasse | Anfangsfarbe | Stabilitätsabbruch (Minuten) |
|---|---|---|
| A | weiß | 135 |
| B | weiß | 105 |
| C | rötlich | 120 |
| D | weiß | 45 |
| E | rötlich | 45 |
| F | rötlich | 30 |

Beispiel 2

Die Polyvinylchloridformmassen G bis L, deren Zusammensetzungen in der Tabelle 3 wiedergegeben sind, wurden nach der oben angegebenen Methode untersucht.

Tabelle 3

| Bestandteil | PVC-Formmasse | | | | | |
|---|---|---|---|---|---|---|
| | G | H | I | J | K | L |
| Suspensions-PVC (K-Wert 60) | 100 | 100 | 100 | 100 | 100 | 100 |
| Natriumaalumosilikat[1] | 1,0 | 1,0 | 1,0 | - | - | - |
| Calciumstearat | 0,5 | 0,5 | 0,5 | 0,5 | 0,5 | 0,5 |
| Zinkstearat | 0,3 | 0,3 | 0,3 | 0,3 | 0,3 | 0,3 |
| Pentaerythritstearinsäureester[2] | 1,0 | - | 1,0 | 1,0 | 1,0 | - |
| Wachsester (Typ Cetylpalmitat) | - | 1,0 | - | - | - | - |
| 2-Ethylhexylthioglykolat | 0,3 | 0,3 | - | 0,3 | - | - |
| epoxydiertes Sojaöl[3] | 4,0 | 4,0 | 4,0 | 4,0 | 4,0 | 4,0 |
| Komplexester[4] | 0,5 | 0,5 | 0,5 | 0,5 | 0,5 | 0,5 |

[1]) Synthetischer Zeolith NaA ; $Na_2O : Al_2O_3 : SiO_2 = 0{,}9 : 1 : 2{,}04$.
Wassergehalt 21,6 Gew.-% ; Teilchengrößenmaximum : 3-6 μ.

[2]) Molverhältnis Pentaerythrit : Stearinsäure = 1 : 1,5 : OHZ 212.

[3]) Epoxidzahl 6,3.

[4]) Adipinsäure-Pentaerythrit-Stearinsäureester ; Molverhältnis 6 : 7 : 16 OHZ ca. 2 ; SZ ca. 10.

Bei der Zusammensetzung G handelt es sich um eine nach dem erfindungsgemäßen Verfahren stabilisierte Polyvinylchloridformmasse, die sich für die Herstellung von Verpackungsmaterial, insbesondere für die Herstellung von Flaschen im Extrusionsblasverfahren eignet. Unter H bis L sind Vergleichsformassen aufgeführt, die aus der Rezeptur G durch Weglassen oder Austausch einzelner Komponenten erhalten wurden.

Die in dieser Versuchsreihe gefundenen Werte für die « statische Thermostabilität » sind in der Tabelle 4 zusammengefaßt.

Tabelle 4

| Formmassen | Anfangsfarbe | Stabilitätsabbruch (Minuten) |
|---|---|---|
| G | farblos | 180 |
| H | farblos | 150 |
| I | rötlich | 180 |
| J | farblos | 105 |
| K | rötlich | 105 |
| L | rötlich | 60 |

Beispiel 3

Die Formmassen N bis S wurden dadurch erhalten, daß man in Teilmengen einer PVC-Masse M der Zusammensetzung

100 Gewichststeile Suspensions-PVC (K-Wert 60)
0,75 Gewichsteile Calciumstearat
0,25 Gewichsteile Zinkstearat
0,3 Gewichtsteile Pentaerythritstearinsäureester (Molverhältnis Pentaerythrit : Stearinsäure = 1 : 1,5 ; OH-Zahl 212)
0,3 Gewichtsteile 2-Ethylhexylthioglykolat
0,75 Gewichsteile Paraffin, Smp. 71 °C

die folgenden Zeolithe n bis s in Mengen von 1 Gewichtsteil pro 100 Gewichtsteile Polyvinylchlorid einarbeitete :

n) synthetischer, nichtaktivierter Na-Zeolith, Typ NaA ; $Na_2O : Al_2O_3 : SiO_2 = 0,99 : 1 : 1,83$ ; Wassergehalt : 20,9 % ; mittlerer Partikeldurchmesser : 5,4 μ.

o) synthetischer, nichtaktivierter Na-Zeolith ; Typ NaX ; $Na_2O : Al_2O_3 : SiO_2 = 1 : 1 : 2,4\text{-}2,6$.

p) synthetischer, nichtaktivierter Na-Zeolith, Typ NaY $Na_2O : Al_2O_3 : 1 : 1 : 4,3$.

q) synthetischer, nichtaktivierter K-Zeolith, Typ KA ; $K_2O : Al_2O_3 : SiO_2 = 1 : 1 : 2$.

r) synthetischer, nichtaktivierter Ca-Zeolith, Typ CaA aus n) durch Ionenaustausch mit Calciumchlorid hergestellt.

s) synthetischer, nichtaktiviertes Natriumalumosilikat, amorph $Na_2O : Al_2O_3 : SiO_2 = 1 : 1 : 2$.

Die Formmasse N wurde nach dem erfindungsgemäßen Verfahren stabilisiert. Die Formmassen M und O bis Q stellen Vergleichszusammensetzungen dar, die durch Weglassen oder Austausch des Natriumalumosilikats n) erhalten wurden. Die Formmassen M bis S wurden nach der angegebenen Methode auf ihre « statische Thermostabilität » hin untersucht. Die dabei gefundenen Ergebnisse sind in der Tabelle 5 zusammengefaßt.

(Siehe Tabelle 5 Seite 11 f.)

Tabelle 5

| Formmasse | Zeolith | Anfangsfarbe | Stabilitäts-abbruch (Min.) |
|---|---|---|---|
| M | - | weiß | 45 |
| N | n) NaA | weiß | 90 |
| O | o) NaX | schwach gelbstichig | 45 |
| P | p) NaY | weiß | 45 |
| Q | q) KA | weiß | 60 |
| R | r) CaA | weiß | 60 |
| S | s)Na amorph | weiß | 60 |

Beispiel 4

In einem schnellaufenden Mischer wurden 100 Gewichtsteile Suspensions-PVC (K-Wert 65) mit 4,65 Gewichtsteilen einer Stabilisatormischung der Zusammensetzung (GT = Gewichtsteile)

20 GT synthetischer, nichtaktivierter Na-Zeolith, Typ NaA ; $Na_2O : Al_2O_3 : SiO_2 = 0{,}99 : 1 : 1{,}83$ ; 20,9 % $H_2O$
10 GT Calciumstearat
3 GT Zinkstearat
3 GT Pentaerythritstearinsäurepartialester (Molverhältn s 1 : 1,5 ; OHZ 212)
3 GT 2-Ethylhexylthioglykolat
7,5 GT Paraffin, Smp. 71 °C

zu einer Formmasse verarbeitet. Bei der Verarbeitung der Formmasse wurde ein handelsüblicher Doppelschnecken-extruder CM 55 (Hersteller : Cincinnati-Milacron, Wien) verwendet. Dieser Extruder hat folgende technische Daten :

| | |
|---|---|
| Schneckendurchmesser : | 55/110 mm |
| wirksame Länge : | 1 050 mm |
| Anordnung : | konisch/kämmend |
| Drehrichtung : | gegenläufig, nach oben auseinander. |

Bei der Herstellung von PVC-Rohren von 5,3 mm Wandstärke und 110 mm Außendurchmesser wurden folgende Bedingungen eingehalten :

| | |
|---|---|
| Zylinder : | 185/170/135 °C |
| Einlauf : | 140 °C |
| Kopf : | 190/190 °C |
| Düse : | 200 °C |
| Dorn : | 190 °C |
| Kern : | 140 °C |
| Motordrehzahl: | 2 000 Upm |
| Schneckendrehzahl : | 35 Upm |
| Motorbelastung : voll aufgefüllte Schnecken | 42-45 % |
| Ausstoß : | 157 kg/h |

Es resultierten weiße bis karamelfarbige Rohre.

Beispiel 5

Eine Stabilisatorkombination wurde aus folgenden Bestandteilen hergestellt (GT = Gewichtsteile) :

10 GT synthetischer, nichtaktivierter Na-Zeolith, Typ NaA ; $Na_2O : Al_2O_3 : SiO_2$ = 0,99 : 1 : 1,83 ; 20,9 Gew.-% $H_2O$,
2 GT Calciumstearat,
4 GT Zinkoctoat,
20 GT Pentyerythritstearinsäureester (Molverhältnis 1 : 1,5 ; OHZ 212)
4 GT 2-Ethylhexylthioglykolat,
10 GT Adipinsäure-Pentaerythrit-Stearinsäureester (Molverhältnis 6 : 7 : 16 ; OHZ ca. 2 ; S.Z. ca. 10)
80 GT epoxidiertes Sojaöl (Epoxidzahl 6,3).

92 Gewichtsteile Suspensions-PVC (K-Wert 60), 8 Gewichtsteile Methacrylat-Butadien-Styrol-Harz und 7 Gewichtsteile der vorstehenden Stabilisatorkombination wurden in einem schnellaufenden Mischer zu einer rieselfähigen dry-blend-Zusammensetzung verarbeitet, die anschließend auf einer üblichen Extrusionsblasanlage (Zylinderdurchmesser 40 mm ; Relative Schneckenlänge 20 D) zu Flaschen von ca. 290 ml Inhalt verarbeitet wurde. Unter konstanten Verarbeitungsbedingungen lieferte diese PVC-Formmasse Flaschen von guter Transparenz, glatter und brillanter Oberfläche und hoher Schlagzähigkeit.

Beispiel 6

Eine Stabilisatorkombination wurde aus folgenden Bestandteilen hergestellt (GT = Gewichsteile) :

10 GT synthetischer, nichtaktivierter Na-Zeolith, Typ NaA ; $Na_2O : Al_2O_3 : SiO_2$ = 0,99 : 1 : 1,83 ; 20 Gew.-% $H_2O$
6 GT Calciumstearat
5 GT Calciumstearat
24 GT Pentaerythritstearat (Molverhältnis 1 : 1,5)
6 GT 2-Ethylhexylthioglykolat
10 GT Adipinsäure-Pentaerythrit-Stearinsäureester (Molverhältnis 6 : 7 : 16 ; OHZ ca. 2 ; SZ ca. 10)
3 GT$\alpha$-Phenylindol
40 GT epoxydiertes Sojaöl (Epoxidzahl 6,3)

100 Gewichtsteile Suspensions-PVC (K-Wert 60) und 7,35 Gewichtsteile der vorstehenden Stabilisatorkombination wurden in einem schnellaufenden Mischer zu einer Formmasse verarbeitet. Diese Formmasse wurde auf einem Laborwalzwerk mit den Abmessungen 450 220 mm (Fa. Berstorff) bei einer Walzentemperatur von 170 °C und einer Walzendrehzahl von 12, 5 Upm im Gleichlauf in üblicher Weise plastifiziert und zu einer ca. 0,5 mm dicken transluzenten Folie ausgewalzt. Diese Folie zeigte eine glatte und brillante Oberfläche.

Beispiel 7

In einem schnellaufenden Mischer wurden 100 Gewichtsteile Suspensions-PVC (K-Wert 65) mit 4,65 Gewichtsteilen einer Stabilisatormischung der Zusammensetzung (GT = Gewichtsteile)

20 GT synthetischer, nichtaktivierter Na-Zeolith, Typ NaA ; $Na_2O_3 : SiO_2$ = 0,99 : 1 : 1,83 ; 20,9 % $H_2O$,
10 GT Calciumstearat,
3 GT Zinkstearat,
2 GT Glycerinstearinsäurepartialester (Molverhältnis 1 : 1,5,
4 GT Ethylenglykolmonothioglykolat,
7,5 GT Paraffin, Smp. 71 °C

zu einer Formmasse verarbeitet. Bei der Verarbeitung der Formmasse wurde ein handelsüblicher Doppelschnecken-extruder CM 55 (Hersteller : Cincinnati-Milacron, Wien) verwendet. Dieser Extruder hat folgende technische Daten :

| | |
|---|---|
| Schneckendurchmesser : | 55/110 mm |
| wirksame Länge : | 1 050 mm |
| Anordnung : | konisch/kämmend |
| Drehrichtung : | gegenläufig, nach oben auseinander. |

Bei der Herstellung von PVC-Rohren von 5,3 mm Wandstärke und 110 mm Außendurchmesser wurden folgende Bedingungen eingehalten :

| | |
|---|---|
| Zylinder : | 185/170/135 °C |
| Einlauf : | 140 °C |
| Kopf : | 190/190 °C |

| | |
|---|---|
| Düse : | 200 °C |
| Dorn : | 190 °C |
| Kern : | 140 °C |
| Motordrehzahl : | 2 000 Upm |
| Schneckendrehzahl : | 35 Upm |
| Motorbelastung : voll aufgefüllte Schnecken | 42-45 % |
| Ausstoß : | 157 kg/h |

Es resultierten weiße bis karamelfarbige Rohre.

Beispiel 8

Eine Stabilisatorkombination wurde aus folgenden Bestandteilen hergestellt (GT = Gewichtsteile) :

10 GT synthetischer, nichtaktivierter Na-Zeolith, Typ NaA ; $Na_2O : Al_2O_3 : SiO_2$ = 0,99 : 1 : 1,83 ; 20,9 Gew.-% $H_2O$,
2 GT Calciumstearat,
4 GT Zinkoctoat,
20 GT Glycerindi-12-hydroxystearat,
4 GT Decandiol-1,10-bis-thioglykolat
10 GT Adipinsäure-Pentaerythrit-Stearinsäureester (Molverhältnis 6 : 7 : 16 ; OHZ ca. 2 ; S.Z. ca. 10)
80 GT epoxidiertes Sojaöl (Epoxidzahl 6,3).

92 Gewichtsteile Suspensions-PVC (K-Wert 60), 8 Gewichtsteile Methacrylat-Butadien-Styrol-Harz und 7 Gewichststeile der vorstehenden Stabilisatorkombination wurden in einem schnellaufenden Mischer zu einer rieselfähigen dry-blend-Zusammensetzung verarbeitet, die anschließend auf einer üblichen Extrusionsblasanlage (Zylinderdurchmesser 40 mm ; Relative Schneckenlänge 20 D) zu Flaschen von ca. 290 ml Inhalt verarbeitet wurde. Unter konstanten Verarbeitungsbedingungen lieferte diese PVC-Formmasse Flaschen von guter Transparenz, glatter und brillanter Oberfläche und hoher Schlagzähigkeit.

Beispiel 9

Eine Stabilisatorkombination wurde aus folgenden Bestandteilen hergestellt (GT = Gewichtsteile) :

10 GT synthetischer, nichtaktivierter Na-Zeolith, Typ NaA ; $Na_2O : Al_2O_3 : SiO_2$ = 0,99 : 1 : 1,83 ; 20 Gew.-% $H_2O$
6 GT Calciumstearat
5 GT Zinkstearat
24 GT Trimethylolpropanlaurat (Molverhältnis 1 : 1,5)
6 GT n-Octadecylthioglykolat
10 GT Adipinsäure-Pentaerythrit-Stearinsäureester (Molverhältnis 6 : 7 : 16 ; OHZ ca. 2 ; SZ ca. 10)
3 GT $\alpha$-Phenylindol
40 GT epoxydiertes Sojaöl (Epoxidzahl 6,3)

100 Gewichtsteile Suspensions-PVC (K-Wert 60) und 7,35 Gewichtsteile der vorstehenden Stabilisatorkombination wurden in einem schnellaufenden Mischer zu einer Formmasse verarbeitet. Diese Formmasse wurde auf einem Laborwalzwerk mit den Abmessungen 450 × 220 mm (Fa. Berstorff) bei einer Walzentemperatur von 170 °C und einer Walzendrehzahl von 12,5 Upm im Gleichlauf in üblicher Weise plastifiziert und zu einer ca. 0,5 mm dicken transluzenten Folie ausgewalzt. Diese Folie zeigte eine glatte und brillante Oberfläche.

**Patentansprüche**

1. Verfahren zur Stabilisierung von Polyvinylchloridformmassen, dadurch gekennzeichnet, daß man in die Formmassen auf 100 Gewichtsteile Polyvinylchlorid.

a) 0,2-5 Gewichtsteile eines synthetischen, kristallinen, 13 bis 25 Gewichtsprozent gebundenes Wasser enthaltenden, feinteiligen, Natriumalumosilikats, das — bezogen auf die wasserfreie Form — die Zusammensetzung 0,7-1,1 $Na_2O \cdot Al_2O_3 \cdot 1{,}3\text{-}2{,}4 SiO_2$ hat (Zeolith 4A),

b) 0,05-1,5 Gewichtsteile Calciumsalz von Fettsäuren mit 8 bis 22 Kohlenstoffatomen,

c) 0,05-0,5 Gewichsteile Zinksalz von Fettsäuren mit 8 bis 22 Kohlenstoffatomen,

d) 0,2-2,0 Gewichtsteile Partialester aus Fettsäuren mit 8 bis 22 Kohlenstoffatomen und Polyolen mit 2 bis 6 Kohlenstoffatomen und 2 bis 6 Hydroxylgruppen, die pro Molekül im Durchschnitt mindestens eine freie Polyol-Hydroxylgruppe enthalten und OH-Zahlen zwischen 140 und 580 aufweisen,

e) 0,1-1,0 Gewichtsteile Thioglykolsäureester von Polyolen mit 2 bis 6 Hydroxylgruppen und/oder Thioglykolsäureester monofunktioneller Alkohole mit 8 bis 22 Kohlenstoffatomen einarbeitet.

2. Verfahren nach Anspruch 1, dadurch gekennzeichnet, daß man die Komponente a) in einer Teilchengröße von 0,1-20 µm einsetzt.

3. Verfahren nach Ansprüchen 1 und 2, dadurch gekennzeichnet, daß man als Komponente a) einen gebundenes Wasser enthaltenen Zeolith 4 A mit einem Wassergehalt von 18-25 Gewichtsprozent einsetzt.

4. Verfahren nach den Ansprüchen 1 bis 3, dadurch gekennzeichnet, daß man als Komponente d) Partialester einer Hydroxylzahl von zwischen 170 und 540 einsetzt, deren Säurezahl zweckmäßigerweise unter 15, insbesondere unter 8 liegt.

5. Verfahren nach den Ansprüchen 1 bis 4, dadurch gekennzeichnet, daß man als Komponente e) Thioglykolate von aliphatischen geradkettigen oder verzweigten Monoalkoholen und/oder Mono- und/oder Di-Thioglykolate der genannten Polyole einsetzt.

6. Verfahren nach den Ansprüchen 1 bis 5, dadurch gekennzeichnet, daß man in die Formmassen als Komponente d) einen Pentaerythritpartialester von Fettsäuren mit 8 bis 22 Kohlenstoffatomen mit einem Molverhältnis von Pentaerythrit : Fettsäure im Bereich von 1 : 1 bis 1 : 2 und als Komponente e) einen Thioglykolsäureester eines monofunktionellen Alkohols mit 8 bis 18 Kohlenstoffatomen, einen Monothioglykolsäureester von aliphatischen Diolen mit 2 bis 6 Kohlenstoffatomen oder ein Glycerinmonothioglykolat einarbeitet.

7. Verfahren nach den Ansprüchen 1 bis 6, dadurch gekennzeichnet, daß man in Formmassen, die für die Herstellung von Rohren und Profilen im Extrusionsverfahren bestimmt sind, auf 100 Gewichtsteile Polyvinylchlorid zusätzlich 0,5-1 Gewichtsteile Paraffin vom Schmelzpunkt 50-110 °C und/oder freie Fettsäure mit 8 bis 22 Kohlenstoffatomen einarbeitet.

8. Verfahren nach den Ansprüchen 1 bis 6, dadurch gekennzeichnet, daß man in Formmassen, die für die Herstellung von Hohlkörpern im Extrusionsblasverfahren bestimmt sind, auf 100 Gewichtsteile Polyvinylchlorid zusätzlich 0,5 bis 5 Gewichtsteile epoxidiertes Sojaöl und 0,1 bis 0,8 Gewichtsteile hochmolekulares Esterwachs einarbeitet.

9. Verfahren nach den Ansprüchen 1 bis 6, dadurch gekennzeichnet, daß man in Formassen, die für die Herstellung von Folien im Kalanderwalzverfahren bestimmt sind, auf 100 Gewichststeile Polyvinylchlorid zusätzlich 0,5 bis 5 Gewichtsteile epoxidiertes Sojaöl, 0,1 bis 1 Gewichtsteil hochmolekulares Esterwachs und 0,2 bis 0,5 Gewichtsteil α-Phenylindol oder Benzoylstearoylmethan einarbeitet.

10. Verfahren nach den Ansprüchen 1 bis 7, dadurch gekennzeichnet, daß man in Formmassen, die zur Herstellung von Rohren und Profilen im Extrusionsverfahren bestimmt sind, auf 100 Gewichtsteile Polyvinylchlorid

a) 1-2 Gewichtsteile Natriumalumosilikat,
b) 0,8-1,2 Gewichtsteile Calciumseife von Fettsäuren,
c) 0,1-0,4 Gewichtsteile Zinksalz von Fettsäuren,
d) 0,3-0,5 Gewichtsteile Polyolpartialester von Fettsäuren,
e) 0,2-0,5 Gewichtsteile Thioglykolsäureester,
f) 0,5-1 Gewichtsteile Paraffin und/oder Fettsäure

einarbeitet.

11. Stabilisatorkombination für Polyvinylchloridformmassen, bestehend aus einer Mischung der im Anspruch genannten Komponenten a) bis e) in den dort genannten Mengenverhältnissen.

12. Stabilisatorkombination nach Anspruch 11, dadurch gekennzeichnet, daß die Komponente a) in einer Teilchengröße von 0,1-20 µm vorliegt.

13. Stabilisatorkombination nach Ansprüchen 11 und 12, dadurch gekennzeichnet, daß die Komponente a) ein gebundenes Wasser enthaltender Zeolith 4A mit einem Wassergehalt von 18-25 Gewichtsprozent ist.

14. Stabilisatorkombination nach Ansprüchen 11 bis 13, dadurch gekennzeichnet, daß Komponente d) aus Partialestern einer Hydroxylzahl zwischen 170 und 540 besteht, die insbesondere eine Säurezahl unter 15, zweckmäßigerweise unter 8 aufweisen.

15. Stabilisatorkombination nach Ansprüchen 11 bis 14, dadurch gekennzeichnet, daß die Komponente e) das Thioglykolat von aliphatischen geradkettigen oder verzweigten Monoalkoholen und/oder Mono- und/oder Di-Thioglykolate der genannten Polyole ist.

16. Stabilisatorkombination für Polyvinylchloridformmassen nach Ansprüchen 11 bis 15, dadurch gekennzeichnet, daß sie als Komponente d) einen Pentaerythritpartialester von Fettsäuren mit 8 bis 22 Kohlenstoffatomen mit einem Molverhältnis von Pentaerythrit : Fettsäure im Bereich von 1 : 1 bis 1 : 2 und als Komponente e) einen Thioglykolsäureester eines monofunktionellen Alkohols mit 8 bis 18 Kohlenstoffatomen, einen Monothioglykolsäureester von aliphatischen Diolen mit 2 bis 6 Kohlenstoffatomen oder ein Glycerinmonothioglykolat enthält.

**Claims**

1. A process for stabilizing polyvinyl chloride molding compounds, characterized in that

a) 0.2 to 5 parts by weight of a synthetic, crystalline, finely divided sodium alumosilicate containing 13 to 25 % by weight bound water and having the composition — based on the anhydrous form — $0.7\text{-}1.1Na_2O \cdot Al_2O_3 \cdot 1.3\text{-}2.4SiO_2$ (zeolite 4A),

b) 0.05 to 1.5 part by weight of the calcium salt of $C_8$-$C_{22}$ fatty acids,

c) 0.05 to 0.5 part by weight of the zinc salt of $C_8$-$C_{22}$ fatty acids,

d) 0.2 to 2.0 parts by weight of partial esters of $C_8$-$C_{22}$ fatty acids and polyols containing 2 to 6 carbon atoms and 2 to 6 hydroxyl groups which, on average, contain at least one free polyol hydroxyl group per molecule and have OH values of 140 to 580,

e) 0.1 to 1.0 part by weight of thioglycolic acid esters of polyols containing 2 to 6 hydroxyl groups and/or thioglycolic acid esters of monofunctional $C_8$-$C_{22}$ alcohols

are incorporated in the molding compounds to 100 parts by weight polyvinyl chloride.

2. A process as claimed in claim 1, characterized in that component a) is used in a particle size of 0.1 to 20 µm.

3. A process as claimed in claims 1 and 2, characterized in that a zeolite 4 A containing bound water with a water content of 18 to 25 % by weight is used as component a).

4. A process as claimed in claims 1 to 3, characterized in that partial esters having a hydroxyl value of 170 to 540 and an acid value of best below 15 and more especially below 8 are used as component d).

5. A process as claimed in claims 1 to 4, characterized in that thioglycolates of aliphatic linear or branched monoalcohols and/or mono- and/or di-thioglycolates of the above-mentioned polyols are used as component e).

6. A process as claimed in claims 1 to 5, characterized in that a pentaerythritol partial ester of $C_8$-$C_{22}$ fatty acids with a molar ratio of pentaerythritol to fatty acid of from 1 : 1 to 1 : 2 is incorporated in the molding compounds as component d) while a thioglycolic acid ester of a monofunctional $C_8$-$C_{18}$ alcohol, a monothioglycolic acid ester of aliphatic $C_2$-$C_6$ diols or a glycerol monothioglycolate is incorporated as component e).

7. A process as claimed in claims 1 to 6, characterized in that 0.5 to 1 part by weight paraffin melting at 50 to 110 °C and/or free fatty acid containing 8 to 22 carbon atoms is additionally incorporated in molding compounds, which are intended for the extrusion of tubes and profiles, to 100 parts by weight polyvinyl chloride.

8. A process as claimed in claims 1 to 6, characterized in that 0.5 to 5 parts by weight epoxidized soybean oil and 0.1 to 0.8 part by weight high molecular weight ester wax are additionally incorporated in molding compounds, which are intended for the production of hollow bodies by extrusion blow molding, to 100 parts by weight polyvinyl chloride.

9. A process as claimed in claims 1 to 6, characterized in that 0.5 to 5 parts by weight epoxidized soybean oil, 0.1 to 1 part by weight high molecular weight ester wax and 0.2 to 0.5 part by weight α-phenyl indole or benzoyl stearoyl methane are additionally incorporated in molding compounds, which are intended for the production of films by thje calender roll process, to 100 parts by weight polyvinyl chloride.

10. A process as claimed in claims 1 to 7, characterized in that

a) 1 to 2 parts by weight sodium alumosilicate,

b) 0.8 to 1.2 part by weight calcium soap of fatty acids,

c) 0.1 to 0.4 part by weight zinc salt of fatty acids,

d) 0.3 to 0.5 part by weight polyol partial esters of fatty acids,

e) 0.2 to 0.5 part by weight thioglycolic acid ester,

f) 0.5 to 1 part by weight paraffin and/or fatty acid

are incorporated in molding compounds, which are intended for the extrusion of tubes and profiles, to 100 parts by weight polyvinyl chloride.

11. A stabilizer combination for polyvinyl chloride molding compounds consisting of a mixture of components a) to e) mentioned in claim 1 in the quantities mentioned therein.

12. A stabilizer combination as claimed in claim 11, characterized in that component a) is present in a particle size of 0.1 to 20 µm.

13. A stabilizer combination as claimed in claims 11 and 12, characterized in that component a) is a zeolite 4 A containing bound water with a water content of 18 to 25 % by weight.

14. A stabilizer combination as claimed in claims 11 to 13, characterized in that component d) consists of partial esters having a hydroxyl value of 170 to 540 which have an acid value of, in particular, below 15 and best below 8.

15. A stabilizer combination as claimed in claims 11 to 14, characterized in that component e) is the thioglycolate of aliphatic linear or branched monoalcohols and/or mono- and/or di-thioglycolates of the polyols mentioned.

16. A stabilizer combination for polyvinyl chloride molding compounds as claimed in claims 11 to 15, characterized in that they contain a pentaerythritol partial ester of $C_8$-$C_{22}$ fatty acids with a molar ratio of pentaerythritol to fatty acid of from 1 : 1 to 1 : 2 as component d) and a thioglycolic acid ester of a monofunctional $C_8$-$C_{18}$ alcohol, a monothioglycolic acid ester of aliphatic $C_2$-$C_6$ diols or a glycerol monothioglycolate as component e).

**Revendications**

1. Procédé de stabilisation de matières à mouler de chlorure de polyvinyle, caractérisé en ce que, pour 100 parties en poids de chlorure de polyvinyle, on incorpore, dans les matières à mouler :

a) 0,2-5 parties en poids d'un aluminosilicate de sodium synthétique, finement divisé, cristallin et contenant 13 à 25 % en poids d'eau fixée, ce silicate ayant, rapporté à la forme anhydre, la composition suivante : 0,7-1,1 $Na_2O \cdot Al_2O_3 \cdot 1{,}3\text{-}2{,}4\ SiO_2$ (zéolite 4A),

b) 0,05-1,5 partie en poids d'un sel de calcium d'acides gras contenant 8 à 22 atomes de carbone,

c) 0,05-0,5 partie en poids d'un sel de zinc d'acides gras contenant 8 à 22 atomes de carbone,

d) 0,2-2,0 parties en poids d'esters partiels d'acides gras contenant 8 à 22 atomes de carbone, ainsi que des polyols contenant 2 à 6 atomes de carbone et 2 à 6 groupes hydroxyle qui, par molécule, contiennent, en moyenne, au moins un groupe polyol-hydroxyle libre et ont des indices OH se situant entre 140 et 580,

e) 0,1-1,0 partie en poids d'esters d'acides thioglycoliques de polyols contenant 2 à 6 groupes hydroxyle et/ou d'esters d'acides thioglycoliques d'alcools monofonctionnels contenant 8 à 22 atomes de carbone.

2. Procédé selon la revendication 1, caractérisé en ce qu'on utilise le composant a) en particules d'une granularité de 0,1 à 20 µm.

3. Procédé selon les revendications 1 et 2, caractérisé en ce que, comme composant a), on utilise une zéolite 4A contenant de l'eau fixée et ayant une teneur en eau de 18 à 25 % en poids.

4. Procédé selon les revendications 1 à 3, caractérisé en ce que, comme composant d), on utilise des esters partiels ayant un indice hydroxyle se situant entre 170 et 540 et dont l'indice d'acide se situe avantageusement en dessous de 15, en particulier, en dessous de 8.

5. Procédé selon les revendications 1 à 4, caractérisé en ce que, comme composant e), on utilise des thioglycolates de mono-alcools aliphatiques à chaîne droite ou ramifiée et/ou des mono- et/ou des dithioglycolates des polyols mentionnés.

6. Procédé selon les revendications 1 à 5, caractérisé en ce que, dans les matières à mouler, comme composant d), on incorpore un ester partiel de pentaérythritol d'acides gras contenant 8 à 22 atomes de carbone avec un rapport molaire pentaérythritol/acide gras se situant dans l'intervalle allant de 1 : 1 à 1 : 2 et, comme composant e), un ester d'acide thioglycolique d'un alcool monofonctionnel contenant 8 à 18 atomes de carbone, un ester d'acide mono-thioglycolique de diols aliphatiques contenant 2 à 6 atomes de carbone ou un mono-thioglycolate de glycérol.

7. Procédé selon les revendications 1 à 6, caractérisé en ce que, dans les matières à mouler qui sont destinées à la fabrication de tubes et de profilés moyennant un procédé d'extrusion, pour 100 parties en poids de chlorure de polyvinyle, on incorpore, en outre, 0,5-1 partie en poids de paraffine d'un point de fusion de 50-110 °C et/ou un acide gras libre contenant 8 à 22 atomes de carbone.

8. Procédé selon les revendications 1 à 6, caractérisé en ce que, dans les matières à mouler qui sont destinées à la fabrication de corps creux moyennant un procédé de soufflage avec extrusion, pour 100 parties en poids de chlorure de polyvinyle, on incorpore, en outre, 0,5 à 5 parties en poids d'huile de soja époxydée et 0,1 à 0,8 partie en poids d'une cire d'ester de poids moléculaire élevé.

9. Procédé selon les revendications 1 à 6, caractérisé en ce que, dans les matières à mouler qui sont destinées à la fabrication de feuilles minces dans un procédé de calandrage, pour 100 parties en poids de chlorure de polyvinyle, on incorpore, en outre, 0,5 à 5 parties en poids d'huile de soya époxydée, 0,1 à 1 partie en poids d'une cire d'ester de poids moléculaire élevé et 0,2 à 0,5 partie en poids d'α-phénylindol ou de benzoyl-stéaroyl-méthane.

10. Procédé selon les revendications 1 à 7, caractérisé en ce que, dans les matières à mouler qui sont destinées à la fabrication de tubes et de profilés moyennant un procédé par extrusion, pour 100 parties en poids de chlorure de polyvinyle, on incorpore :

a) 1- 2 parties en poids d'aluminosilicate de sodium,

b) 0,8-1,2 partie en poids de savons de calcium d'acides gras,

c) 0,1-0,4 partie en poids d'un sel de zinc d'acides gras,

d) 0,3-0,5 partie en poids d'esters partiels de polyols d'acides gras,

e) 0,2-0,5 partie en poids d'esters d'acides thioglycoliques,

f) 0,5-1 partie en poids d'une paraffine et/ou d'un acide gras.

11. Combination de stabilisants pour des matières à mouler de chlorure de polyvinyle, constituée d'un mélange des composants a) à e) mentionnés dans la revendication 1, dans les rapports quantitatifs y indiqués.

12. Combinaison de stabilisants selon la revendication 1, caractérisée en ce que le composant a) se présente en particules d'une granularité de 0,1 à 20 µm.

13. Combinaison de stabilisants selon les revendications 11 et 12, caractérisée en ce que le composant a) est une zéolite 4A contenant de l'eau fixée et ayant une teneur en eau de 18 à 25 % en poids.

14. Combinaison de stabilisants selon les revendications 11 à 13, caractérisée en ce que le composant d) est constitué d'esters partiels d'un indice hydroxyle se situant entre 170 et 540 et ayant, en particulier, un indice d'acide inférieur à 15, avantageusement inférieur à 8.

15. Combinaison de stabilisants selon les revendications 11 à 14, caractérisée en ce que le

composant e) est le thioglycolate de monoalcools aliphatiques à chaîne droite ou ramifiée et/ou des mono- et/ou des di-thioglycolates des polyols mentionnés.

16. Combinaison de stabilisants pour matières à mouler de chlorure de polyvinyle selon les revendications 11 à 15, caractérisée en ce que, comme composant d), elle contient un ester partiel de pentaérythritol d'acides gras contenant 8 à 22 atomes de carbone avec un rapport molaire pentaérythritol/acide gras se situant dans l'intervalle allant de 1 : 1 à 1 : 2 et, comme composant e), un ester d'acide thioglycolique d'un alcool monofonctionnel contenant 8 à 18 atomes de carbone, un ester d'acide monothioglycolique de diols aliphatiques contenant 2 à 6 atomes de carbone ou un monothioglycolate de glycérol.